Europäisches Patentamt

European Patent Office

Office européen des brevets

(19)

(11) Publication number: **0 143 546**
A1

# (12) EUROPEAN PATENT APPLICATION

(21) Application number: **84307317.2**

(22) Date of filing: **24.10.84**

(51) Int. Cl.⁴: **B 65 G 47/82**

(30) Priority: **02.11.83 GB 8329272**

(43) Date of publication of application: **05.06.85**
Bulletin 85/23

(84) Designated Contracting States: **AT BE CH DE FR GB IT LI LU NL SE**

(71) Applicant: **Cadbury Ireland Limited, Coolock, Dublin 5 (IE)**

(72) Inventor: **Tulloch, Thomson Robert, 26 The Lawns, Melbourn Royston Hertfordshire (GB)**

(74) Representative: **Nash, Keith Wilfrid et al, KEITH W. NASH & Co. Pearl Assurance House 90-92 Regent Street, Cambridge CB2 1DP (GB)**

(54) **Apparatus for unloading conveyors.**

(57) Apparatus for use with a conveyor (12) for offloading articles (18) therefrom in a controlled manner, comprising a rotary escapment (28) which interacts with the conveyor (10) to buffer each article (18) as it becomes the leading article on the conveyor (10), and to slide this article laterally off the conveyor (10) typically into a container (16) therefor carried on a transversely moving conveyor (12) synchronised with the first to cause the containers (16) to be positioned as required. An adjustable stop (42) serves to arrest the forward movement of each leading article (18) at the time it leaves the conveyor (10).

- 1 -

C31/I

Title: Apparatus for Unloading Conveyors

## Description

This invention relates generally to apparatus for unloading conveyors and finds particular but not exclusive application to the lateral offloading of similar articles moving on a conveyor on to second, eg transverse, conveyor or into receptacles moving on said second conveyor.

## Prior art

In the food industry it is a common requirement for manufactured items such as chocolate bars to be loaded into preformed trays. This process is often carried out manually, especially in the case of fragile items such as crumbly or flaky chocolate bars.

The items are conveyed in line to a tray loading point, and prior proposals to dispose offloading apparatus at this point, in order to eliminate manual handling, have not proved entirely successful.

The known proposals for offloading apparatus include suction devices and mechanised grippers. Suction cups are generally applicable onto smooth surfaced, non-porous items, whilst grippers are applicable only to items firm enough to withstand the grippers. In addition, this type of offloading apparatus is usually relatively slow. Other proposals include trap door devices, wherein the items are successively conveyed over a trap door which is then either slid back or tilted to drop the item into a tray.

Apparatus of this type is also relatively slow. Furthermore, as the items often fall freely under gravity they may drop into a tilted or canted position in the tray. The use of multiple trap doors can speed up the process, but only at the cost of increased material handling and machine complexity.

## Object of the invention

It is an object of this invention to provide conveyor offloading apparatus which minimizes or avoids the disadvantages of the known proposals.

## The Invention

According to one aspect of the present invention, apparatus for use with a feed conveyor on which a succession of similar articles are conveyed in line with freedom for slippage in the feed direction to form a transfer station at which articles can be unloaded, comprises a rotary escapement mechanism having a plurality of abutment members which rotate in a common closed path whilst maintaining a constant orientation relative to the direction of the feed conveyor, the rotary escapement mechanism being positioned relative to the feed conveyor so that a trailing face of each abutment member buffers the foremost of the in-line articles on the feed conveyor whilst a lateral face of the following abutment member operates so as to push the buffered article laterally relative to the feed conveyor, movement of the buffering member in the direction of the feed conveyor permitting the buffered article to advance on the feed conveyor to the transfer station whilst being laterally displaced, the arrangement being such that, when a buffered article reaches the transfer station, it has been pushed laterally sufficiently far to leave the lateral edge of the feed conveyor so as to pass on to a second conveyor and/or into a receptacle.

The invention is especially applicable, in the food industry, to the loading of articles such a cholocolate bars or other food items into receptacles such as preformed trays.

Thus, according to another aspect of the invention, there is provided apparatus for loading similar articles into receptacles, comprising:-

1) a feed conveyor for delivering articles to a transfer station;

2) a rotary escapement mechanism located near to the transfer station comprising a plurality of abutment members which rotate in a closed path whilst maintaining a constant orientation relative to the feed conveyor,

3) a take-up conveyor the line of which is substantially at right angles to the line of the feed conveyor, which take-up conveyor carries the receptacles to be filled and is movable in synchronism with the rotary escapement mechanism, adjacent the transfer station;

4) means controlling the movement of the abutment members whereby a trailing face of each in turn buffers the leading one of the articles for the time being on the feed conveyor, and a lateral face of the following abutment member moves the buffered article sideways thereby eventually to push said article off the feed conveyor at the transfer station as it continues to advance in the direction of the feed conveyor, and

5) a stationary stop member near the transfer station which prevents continued movement of the article in the direction imparted by the feed conveyor at the same time as the article leaves the edge of the feed conveyor so as to cause each laterally pushed article to leave the feed conveyor in line with the receptacle which is to receive it.

The so-called feed conveyor may be a main in-feed conveyor or a transfer conveyor for transferring articles from an in-feed conveyor to the transfer station.

The articles are preferably delivered in line to the transfer station, guide means being provided to maintain such article alignment.

According to a preferred feature of the invention, the guide means ends at a point relative to the locus of the abutment members of the rotary escapement mechanism such that the trailing end of each abutment member co-operates with the guide means and moves in a manner relative thereto so as to laterally separate each foremost buffered article from the next following article in the line.

The feed conveyor is preferably driven by one motor, whilst the rotary escapement mechanism and take-up conveyor are driven by another motor, the rotary escapement mechanism and take-up conveyor being geared together such that the latter moves forward one article-receiving place for that angle of rotation of the escapement mechanism necessary to buffer and offload one article.

The feed conveyor is preferably a closed loop belt conveyor with an upper run traversing over the top of the take-up conveyor and a lower run traversing beneath the take-up conveyor. The latter conveyor is preferably a non-stretch timing belt with teeth interlocking with a driving pulley and projections to hold the receptacles in predetermined registration both with one another and with the off-load point at the transfer station along the feed conveyor. The rotary escapement mechanism is, of course, positioned at the junction of the two conveyors.

A preferred rotary escapement mechanism comprises upper and lower discs separated in eccentric relationship by a crank at the centre and a number of corresponding outer cranks towards the periphery, the abutment members being in the form of blocks secured as by being pinned to the crankshafts of the outer cranks below the lower disc. This arrangement is preferably driven by holding the shaft of the centre crank rigid, above the upper disc, and driving said upper disc, for example, by a timing belt pulley.

Description of drawings

A practical arrangement of conveyor offloading apparatus in accordance with the invention will now be described by way of example with reference to the accompanying drawing, in which:-

Figure 1 is a plan view of the apparatus;

Figure 2 is an elevational cross-section through the rotary escapement mechanism;

Figure 3 shows a detail of the escapement mechanism in enlargement;

Figure 4 is a diagrammatic view of the overall arrangment of two conveyors, seen in elevation; and

Figure 5 showns a take-up conveyor.

## Description of embodiment

In the drawings, the reference 10 denotes a feed delivery conveyor, whilst the reference 12 denotes a take-up conveyor operative at right angles to the feed conveyor.

The intersection of the two conveyors defines a transfer station.

The feed conveyor 10 feeds articles 18, such as chocolate bars or like food items, toward on offloading point in the transfer station (generally indicated 14), whereat the articles are delivered into receptacles 16 borne by the take-up conveyor 12.

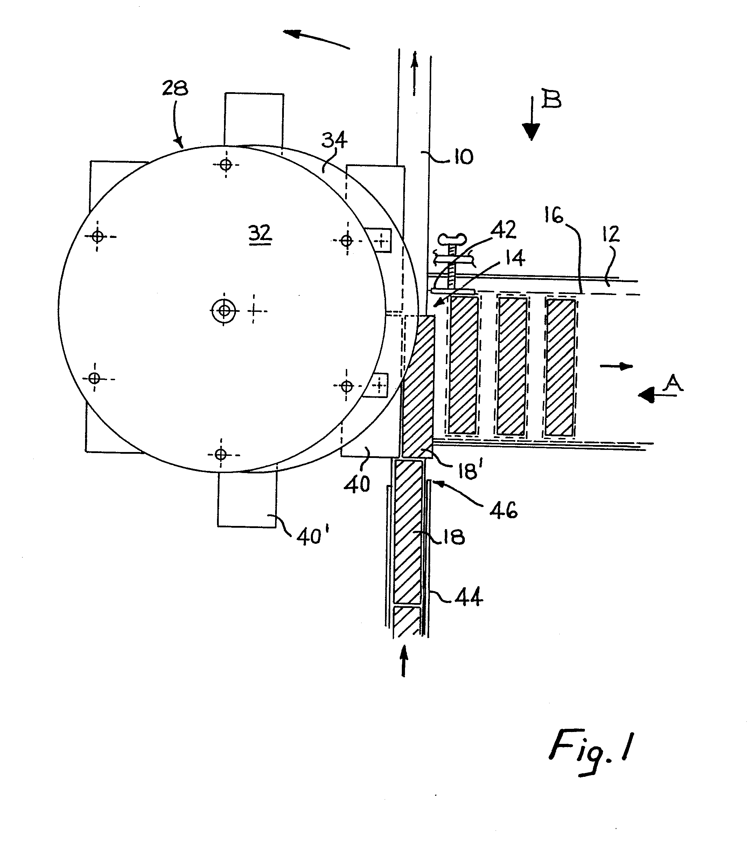

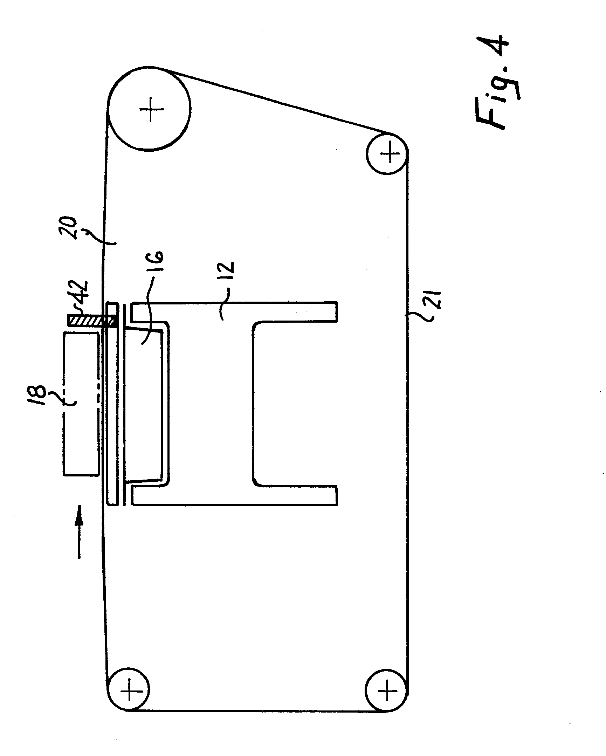

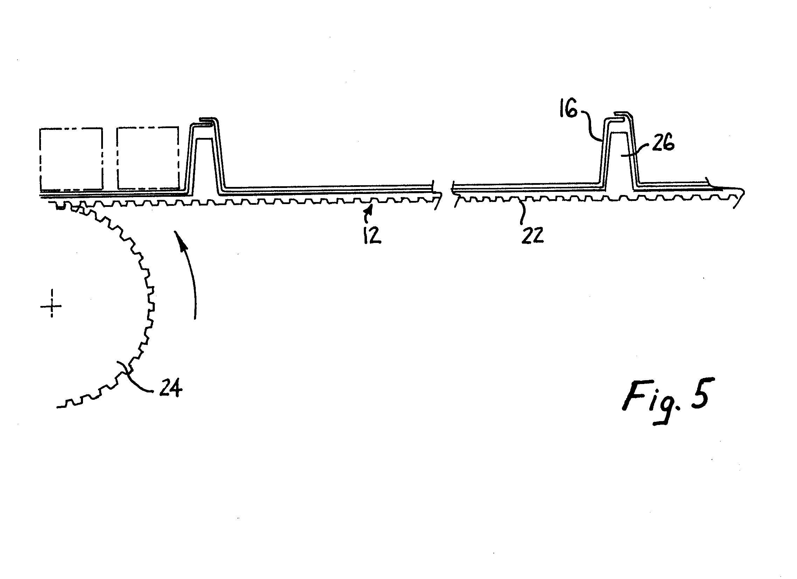

The articles 18 are similar in shape and form, and in particular being of similar length, at least approximately similar width, and of thickness sufficient to prevent them riding up on one another, as they are fed in aligned nose to tail relationship by the feed conveyor 10. The latter is a simple belt conveyor which, as indicated in Figure 4, has an upper run 20 passing on a dead plate above the take-up conveyor 12 and a lower run 21 passing beneath it. The feed conveyor is powered by an independant motor. The take-up conveyor 12 (see Figure 5) is a non-stretch timing belt having a lower driven side 22 with teeth which interlock with a driving pulley 24, and with projections 26 on the upper side for holding the receptacles 16, which as illustrated in Figure 1 are preformed trays each having depressions for receiving a plurality of chocolate bars or like food items. However, the invention is applicable to other situations, such as one receptacle per article on the one hand , and delivery of articles on to the take-up conveyor, without use of receptacles, on the other. Figure 5 shows a plain tray without depressions for receiving a plurality of articles.

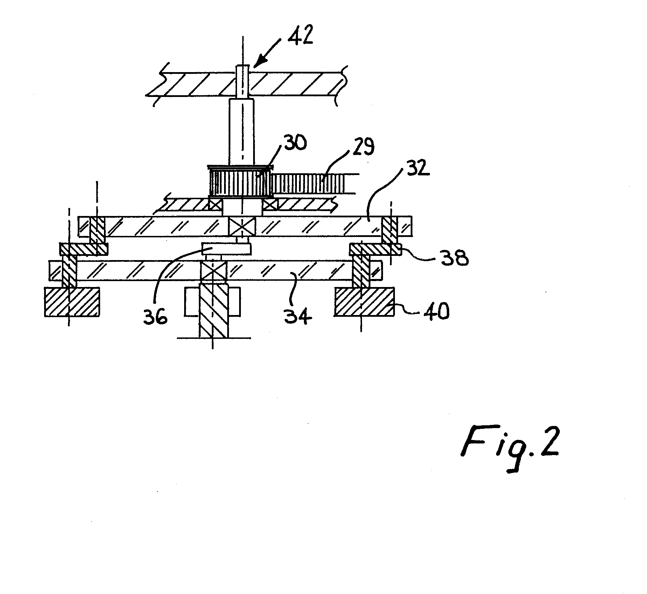

The means of offloading the articles from the feed conveyor 10 into the receptacles on the take-up conveyor is a rotary escapement mechanism, generally referenced 28, driven by the same motor as the take-up conveyor 12 through a timing belt 29 and timing pulley 30 (see Figure 2).

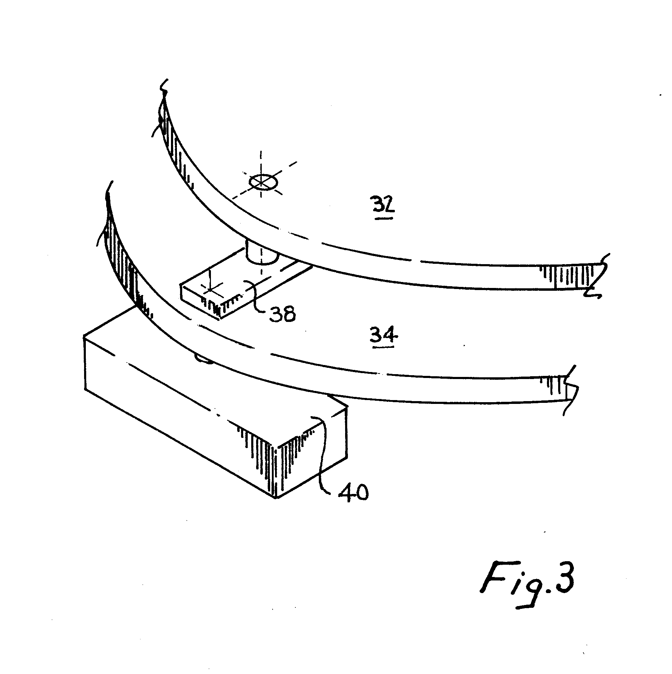

The rotary escapement mechanism comprises upper and lower discs, respectively 32, 34, as shown in Figures 1 to 3, separated in eccentric relationship by a central crank 36 and six corresponding outer cranks 38. Abutment blocks 40 are pinned to the lower crankshafts of the outer cranks 38, below the lower disc. The upper crankshaft of the central pulley is fixed at 42, and it is the upper disc 32 which is driven by the timing belt 29 through the timing pulley 30. As discs 32, 34 rotate in eccentric relationship, the abutment blocks 40 process in a closed generally circular path, whilst maintaining a fixed orientation relative to the line of the feed conveyor.

In use, articles on the feed conveyor 10 (see Figure 1) are fed toward the transfer station at the junction with the take-up conveyor 12, at which junction is located the rotary escapement mechanism 28.

As each article 18 of the in-line succession of articles comes to the head of the line (ie the foremost position) and is brought to bear against the trailing face of an abutment block 40, which acts as a buffer slowing down movement of said foremost article 18, and thus of the whole following line of articles, as permitted by slippage of the articles on the conveyor belt 10. Abutment block 40 forms part of the rotary escapement mechanism 28, and buffered advance of the foremost article 18 is permitted as this escapement mechanism rotates. However, as the escapement mechanism rotates further, the next abutment block 40 will be brought to bear laterally against the side of the buffered artical 18, so that during its buffered advance, the article is also pushed laterally towards the edge of the feed conveyor 10. In Figures 1 and 2, reference 18' denotes an article which is being pushed laterally by abutment block 40. The article 18 will be correspondingly pushed by the abutment block 40'.

Reference 42 denotes a stop, adjustable in position across the width of the take-up conveyor 12. Buffered article 18' continues its advance, as well as being laterally pushed to overlie the edge of the feed conveyor, until it comes up against the stop 42. At this point of movement of the rotary escapement mechanism or very shortly thereafter, abutment block 40', laterally pushes article 18 into a position in which it so overhangs the edge of the feed conveyor as to drop off over such edge into the receptacle 16 on the take-up conveyor. The latter conveyor subsequently advances one article-receivng place,

0143546

- 9 -

ready to receive the article 18 laterally pushed by abutment block 40' in due course.

Guides 44 for maintaining the in-line relationship of the articles on the feed conveyor are of considerable importance. In particular, such guide means ends at 46 only just short of the rotary escapement mechanism 28 and co-operates therewith to maintain the in-line orientation of the foremost article buffered by block 40 whilst the preceding article 18 is being laterally separated therefrom by the pushing action of this block 40.

Various modifications of the above described arrangement are possible within the scope of the invention hereinbefore defined.

Claims

1.  Apparatus for use with a feed conveyor on which a succession of similar articles are conveyed in line with freedom for slippage in the feed direction, to form a transfer station at which articles can be unloaded from the feed conveyor, comprising a rotary escapement mechanism having a plurality of abutment members which rotate in a common closed path whilst maintaining a constant orientation relative to the direction of the feed conveyor, the rotary escapement mechanism being positioned relative to the feed conveyor so that a trailing face of each abutment member will in turn buffer the foremost of the in-line articles on the feed conveyor whilst a lateral face of the following abutment member operates so as to push the buffered article laterally relative to the feed conveyor, movement of the buffering abutment member in the direction of the feed conveyor permitting the buffered article to advance on the feed conveyor to the transfer station whilst being laterally displaced, the arrangement being such that, when a buffered article reaches the transfer station, it has been pushed laterally sufficiently far to leave the lateral edge of the feed conveyor.

2.  Apparatus for loading similar articles into receptacles, comprising:-

1) a feed conveyor for delivering articles to a transfer station;

2) a rotary escapement mechanism located near to the transfer station comprising a plurality of abutment members which rotate in a closed path whilst maintaining a constant orientation relative to the feed conveyor;

3) a take-up conveyor the line of which is substantially at right-angles to the line of the feed conveyor, which take-up conveyor carries the receptacles to be filled and is movable in synchronism with the rotary escapement mechanism;

4) means controlling the movement of the abutment members whereby a trailing face of each in turn buffers the leading one of the articles for the time being on the feed conveyor, and a lateral face of the following abutment member moves the buffered article sideways thereby eventually to push said article off the feed conveyor at the transfer station as it continues to advance in the direction of the feed conveyor, and

5) a stationary stop member near the transfer station which prevents continued movement of the article in the direction imparted by the feed conveyor at the same time as the article leaves the edge of the feed conveyor so as to cause each laterally pushed articles to leave the feed conveyor in line with the receptacle which is to receive it.

3. Apparatus according to claim 2 wherein guide means is provided to maintain alignment of the articles supplied to the transfer station.

4. Apparatus according to claim 3 wherein the guide means ends at a point relative to the locus of the abutment members of the rotary escapement mechanism such that the trailing end of the each abutment member co-operates with the guide means and moves in a manner relative thereto so as to laterally separate each foremost buffered article from the next following article in the line.

5. Apparatus according to any of claims 2 to 4 wherein the feed conveyor is driven by one motor, whilst the rotary escapement mechanism and take-up conveyor are driven by another motor, the rotary escapement mechanism and take-up conveyor being geared together such that the latter moves forward one article-receiving place for that angle of rotation of the escapement mechanism necessary to buffer and offload one article.

6. Apparatus according to any of claims 2 to 5 wherein the feed conveyor is a closed loop belt conveyor with an upper run traversing over the top of the take-up conveyor and a lower run traversing beneath the take-up conveyor.

7. Apparatus according to claim 6 wherein the take-up conveyor is a non-stretch timing belt with teeth on one side interlocking with a driving pulley and projections on the other side to hold the receptacles in predetermined registration both with one another and with the off-load point at the transfer station along the feed conveyor.

8. Apparatus according to any of claims 2 to 7 wherein the rotary escapement mechanism is positioned at the junction of the two conveyors.

9. Apparatus according to any of claims 1 to 8 wherein the rotary escapement mechanism comprises upper and lower discs separated in eccentric relationship by a crank at the centre and a number of corresponding outer cranks

0143546

- 13 -

towards the periphery, the abutment members being in the form of blocks secured to the crankshafts of the outer cranks below the lower disc, and wherein the shaft of the centre crank is held rigid, above the upper disc, and said upper disc is driven.

10. Apparatus for use with conveyors substantially as herein described with reference to and as illustrated in the accompanying drawings.

1/5

*Fig.1*

Fig.2

0143546

32

38

34

40

Fig.3

Fig. 4

0143546

*Fig. 5*

European Patent
Office

**EUROPEAN SEARCH REPORT**

Application number

| DOCUMENTS CONSIDERED TO BE RELEVANT | | | EP 84307317.2 | |
|---|---|---|---|---|
| Category | Citation of document with indication, where appropriate, of relevant passages | Relevant to claim | CLASSIFICATION OF THE APPLICATION (Int. Cl.4) | |
| A | <u>DE - B2 - 2 735 364</u> (TEVOPHARM-SCHIEDAM) <br><br> * Totality * <br><br> ---- | 1,10 | B 65 G 47/82 | |
| | | | **TECHNICAL FIELDS SEARCHED (Int. Cl.4)** | |
| | | | B 65 G | |
| | The present search report has been drawn up for all claims | | | |

| Place of search | Date of completion of the search | Examiner |
|---|---|---|
| VIENNA | 07-02-1985 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82